# FASCICULE DE BREVET EUROPEEN

(11) **EP 2 335 261 B1**
(45) Date de publication et mention de la délivrance du brevet: **01.02.2017**
(21) Numéro de dépôt: 09818819.6
(22) Date de dépôt: 09.10.2009
(51) Int. Cl.: H01H 13/807, G06F 3/033

(54) **DISPOSITIF DE COMMANDE A SURFACE TACTILE**
STEUERVORRICHTUNG MIT BERÜHRUNGSEMPFINDLICHER BEDIENOBERFLÄCHE
CONTROL DEVICE WITH TACTILE SURFACE

(30) Priorité: 09.10.2008 FR 0805566
(43) Date de publication de la demande: 22.06.2011
(73) Titulaire: DAV, 94000 Creteil (FR)
(72) Inventeur: DROUIN, Xavier, F-74106 Annemasse (FR); LAURENT, Patrice, F-74106 Annemasse (FR); VANHELLE, Stéphane, F-74106 Annemasse (FR)
(74) Mandataire: Pothmann, Karsten
(86) Numéro de dépôt international: PCT/EP2009/063228
(87) Numéro de publication internationale: WO 2010/040850

(56) Documents cités:
- EP-A- 1 429 355
- EP-A- 1 429 356
- DE-A1- 10 155 397
- JP-A- 9 063 412
- US-A- 4 268 815
- US-A- 5 680 160
- US-A1- 2003 053 280
- US-A1- 2006 278 013

## Description

La présente invention est relative à un dispositif de commande électrique à surface tactile, en particulier pour véhicule automobile. Plus précisément, un tel dispositif trouve une application pour les commandes se trouvant au niveau de la console entre les deux sièges avant d'un véhicule automobile pour par exemple commander des fonctions de climatisation, d'un système audio, d'un système de téléphonie ou encore d'un système de navigation.

Dans le domaine automobile, les commandes de divers organes électriques sont réalisées classiquement par des commutateurs / interrupteurs. Le document US5680160 décrit un exemple de commutateur. Toutefois, au vu du nombre croissant d'organes électriques à commander, des dispositifs de commande multifonctions sont de plus en plus utilisés du fait des avantages ergonomiques qui en résultent. En effet, à partir d'un seul bouton de commande, réalisé par exemple sous forme d'un joystick, associé à un écran d'affichage, on peut naviguer dans des menus déroulants pour commander par exemple la climatisation, le système audio ou encore le système de navigation.

Pour augmenter le confort ergonomique, l'utilisation d'une technologie à capteur tactile, seule ou en complément de tels boutons multifonctions, peut être considérée comme un développement intéressant. En effet, les capteurs tactiles, en particulier pour le domaine automobile, ont fait des progrès importants.

Les dispositifs de commande électrique intégrant des capteurs à surface tactile permettent de détecter un appui simple du doigt d'un utilisateur et, en fonction de la position de l'appui détecté et/ou du déplacement ultérieur de cet appui sur la surface, de déclencher un type particulier d'action ou de commande d'organe tel que d'un véhicule automobile.

Une technologie utilisant des résistances sensibles à la pression (également connu sous le nom capteur FSR pour « Force Sensing Resistor ») devance de plus en plus d'autres technologies équivalentes, comme par exemple des technologies capacitives ou encore optiques grâce à sa facilité de mise en oeuvre et sa robustesse.

De tels capteurs sont par exemple connus sous le nom tablette digitalisante (dénomination anglaise "Digitizer pad") et on cite comme art antérieur les documents suivants : EP 1 429 355 ou EP 1 429 356 ou US 4 268 815 décrivant la préambule de la revendication 1).

Par ailleurs, au cours de la navigation par un utilisateur dans un menu, on dissocie en général deux étapes distinctes à savoir l'étape de sélection d'une commande et l'étape de validation d'une commande.

Lors de l'étape de sélection, on choisit dans le menu déroulant la commande à appliquer. Puis, la commande n'est effective qu'avec l'étape de validation du choix sélectionné. La dissociation des deux étapes est importante, notamment dans un véhicule, en marche, pour ne pas provoquer des commandes intempestives du fait des vibrations.

Ainsi, il peut être avantageux d'associer ces surfaces tactiles aux solutions classiques de commande tels que les commutateurs / interrupteurs dans un même dispositif de commande. La surface tactile de commande permet alors par exemple, de sélectionner une commande dans des menus déroulants pour commander par exemple la climatisation, le système audio ou encore le système de navigation. Un appui ultérieur sur un commutateur permet, par exemple, de valider l'étape de sélection de la commande.

Cependant, ces deux technologies de commande doivent pouvoir être intégrées dans un dispositif multifonction de commande présentant une surface active de commande uniforme pour être d'utilisation transparente par l'utilisateur.

La présente invention vise donc à proposer un dispositif de commande à surface tactile ergonomique pour l'utilisateur permettant d'assurer plusieurs fonctions de commande telles que notamment les deux fonctions de sélection et de validation.

A cet effet, l'invention a pour objet un dispositif de commande à surface tactile défini par l'objet de la revendication 1.

Ainsi, lorsqu'un utilisateur appuie sur la surface tactile du dispositif, définie par la surface des capteurs accessible à l'utilisateur, deux commandes de fonctions distinctes peuvent être détectées. Un utilisateur peut alors ordonner très facilement une commande choisie dans un menu ou une liste de sélection tout en conduisant. En effet, un premier appui sur le dispositif permet par exemple de sélectionner une commande. Puis, sans gestuelle compliquée, il suffit à l'utilisateur de réaliser une pression supplémentaire pour valider cette commande. Cet avantage ergonomique permet à l'utilisateur de rester plus concentré sur sa conduite. En outre, les capteurs de pression du dispositif présentent l'avantage d'être plus faciles à mettre en oeuvre et plus robustes que d'autres capteurs reposant sur d'autres technologies.

Le capteur de pression de plus petite dimension, également appelé premier capteur, présente alors la forme d'une touche de commande, notamment adaptée pour une commande de validation d'une fonction tandis que le capteur de pression de dimension supérieure, également appelé deuxième capteur, présente la forme d'un pavé de commande, notamment adapté pour la sélection d'une commande ou la reconnaissance d'un caractère.

On peut disposer le premier capteur de pression de plus petite dimension entre ledit deuxième capteur et un socle du dispositif. Ledit deuxième capteur couvre alors au moins en partie ledit premier capteur de pression, la partie « supérieure » du dispositif correspondant à la surface tactile des capteurs accessible à l'utilisateur. La surface tactile est alors perçue de manière homogène par le doigt ou la pointe d'un stylet d'un utilisateur.

Alternativement, on dispose ledit deuxième capteur de pression présentant une surface tactile de dimensions supérieures entre ledit premier capteur de pression et le socle.

Selon un autre exemple de réalisation, le premier et le deuxième capteurs présentent des surfaces tactiles de dimensions sensiblement identiques.

Ainsi, le dispositif peut comporter un premier capteur de pression disposé au-dessus ou en-dessous d'un deuxième capteur de pression et le premier capteur de pression peut présenter une surface identique, plus petite ou plus grande que le deuxième capteur de pression.

Selon un exemple de réalisation, ledit premier et ledit deuxième capteurs comportent une couche souple de support commune. La couche de support commune permet de limiter le nombre de composants du dispositif et donc de réduire son épaisseur ainsi que les coûts de fabrication. Le dispositif ainsi obtenu possède une épaisseur de l'ordre de quelques dixièmes de millimètres.

On prévoit par exemple qu'un élément contacteur d'une couche souple de support comporte une couche résistive dont la résistance peut varier lors de la compression desdites couches.

Le seuil minimal de détection propre (ou « seuil minimal de détection » dans la description) correspond à la limite basse de détection propre à chaque capteur de pression. La superposition desdits capteurs décale le seuil minimal de détection dudit premier capteur disposé ou interposé entre ledit deuxième capteur ou l'autre capteur et le socle. Ainsi, ledit premier capteur de pression interposé permet la détection d'une deuxième commande successive à une première commande détectée par le deuxième capteur de pression et correspondant à une pression d'appui plus élevée.

Le premier et deuxième capteurs présentent des seuils minimaux de détection propres respectifs distincts, notamment pour mieux maîtriser le décalage entre les plages de pression détectables par lesdits deux capteurs.

Dans un premier exemple, un premier capteur de pression pris en sandwich entre le socle et ledit deuxième capteur de pression est configuré pour présenter une plage de détection propre plus sensible que la plage de détection propre dudit deuxième capteur de pression disposé en-dessus. Autrement dit, ledit deuxième capteur de pression présente un seuil minimal de détection propre supérieur au seuil minimal de détection du premier capteur disposé en dessous. Dans ce cas, le deuxième capteur de pression est configuré pour transmettre une pression d'appui au premier capteur de pression sans se déformer tant que la pression d'appui n'est pas supérieure au seuil minimal de détection propre du deuxième capteur.

Dans un deuxième exemple, le premier capteur de pression pris en sandwich entre le socle et ledit deuxième capteur de pression est configuré pour présenter une plage de détection propre moins sensible que la plage de détection propre dudit deuxième capteur de pression disposé en-dessus. Autrement dit, ledit deuxième capteur de pression présente un seuil minimal de détection propre inférieur au seuil minimal de détection du premier capteur disposé en dessous.

Ainsi, une pression d'appui « légère » d'un utilisateur sur la surface tactile du dispositif, correspondant à une pression d'appui supérieure au seuil minimal pouvant être détectée par le deuxième capteur permet d'obtenir une information de la position de la pression, permettant par exemple la reconnaissance de caractère pour la sélection d'une commande particulière du dispositif.

Puis, une pression d'appui « forte » de l'utilisateur sur la surface tactile, correspondant à une pression d'appui supérieure au seuil minimal de pression pouvant être détectée par le premier capteur, permet d'obtenir une information, en particulier de la position de la pression correspondant à une deuxième commande.

On obtient alors un dispositif permettant de réaliser deux fonctions successives, au même emplacement de la surface tactile du dispositif par un simple touché de ladite surface tactile.

On prévoit que le seuil minimal de détection propre dudit premier capteur est au moins cinq fois supérieur au seuil minimal de détection propre dudit deuxième capteur. On est ainsi assuré qu'une plage de pression peut être détectable par ledit deuxième capteur seul.

Par exemple, le seuil minimal de détection propre dudit premier capteur est compris entre 150 et 200 grammes/cm² et le seuil minimal de détection propre dudit deuxième capteur est compris entre 20 et 50 grammes/cm².

Selon un premier mode de réalisation, la couche souple de support commune possède une épaisseur supérieure à l'épaisseur de la couche souple de support dudit deuxième capteur, situé au-dessus de sorte que le seuil minimal de pression détectable par ledit premier capteur soit supérieur au seuil minimal de pression détectable par ledit deuxième capteur.

Selon un deuxième mode de réalisation, on prévoit que les éléments contacteurs dudit premier capteur possèdent une conductivité électrique inférieure à la conductivité électrique des éléments contacteurs dudit deuxième capteur.

Selon un troisième mode de réalisation, on prévoit que ledit premier capteur possède une densité d'entretoises supérieure à la densité d'entretoises dudit deuxième capteur.

Selon un quatrième mode de réalisation, on prévoit que l'interstice entre les couches souples de support dudit premier capteur est supérieur à l'interstice entre les couches souples de support dudit deuxième capteur.

Selon un premier exemple d'application, le dispositif de commande comporte une unité de traitement reliée à des signaux de sorties desdits capteurs, l'unité de traitement étant en outre configurée pour qu'une variation de pression détectée par ledit deuxième capteur permette la sélection d'une commande et pour qu'une variation de pression détectée par ledit premier capteur correspondant, permette la validation de ladite commande sélectionnée.

Selon un deuxième exemple d'application, le dispositif de commande comporte une unité de traitement reliée à des signaux de sorties desdits capteurs, l'unité de traitement étant en outre configurée pour qu'une variation de pression détectée par ledit deuxième capteur permette la reconnaissance d'un caractère et pour qu'une variation de pression détectée par ledit premier capteur correspondant permette la validation du caractère reconnu.

D'autres avantages et caractéristiques apparaîtront à la lecture de la description de l'invention, ainsi que des dessins annexés sur lesquels :
- la figure 1 représente une vue de dessus d'un dispositif de commande,
- la figure 2 représente une vue en éclaté du dispositif de commande de la figure 1,
- la figure 3a représente un premier exemple d'une échelle des plages de pressions détectables par des premiers et deuxièmes capteurs de pression,
- la figure 3b représente un deuxième exemple d'une échelle des plages de pressions détectables par des premiers et deuxièmes capteurs de pression,
- la figure 3c représente un troisième exemple d'une échelle des plages de pressions détectables par des premiers et deuxièmes capteurs de pression,
- la figure 4a représente une vue en éclaté d'éléments d'un dispositif de commande selon un premier mode de réalisation,
- la figure 4b est une vue schématique en coupe A-A d'éléments du dispositif de commande de la figure 4a,
- la figure 5 est une vue similaire à la figure 4b, représentant des éléments assemblés d'un dispositif de commande selon un troisième mode de réalisation et,
- la figure 6 est une vue similaire à la figure 4b, représentant des éléments assemblés d'un dispositif de commande selon un quatrième mode de réalisation.

Sur ces figures, les éléments identiques portent les mêmes numéros de référence.

L'invention concerne un dispositif de commande électrique à surface tactile, par exemple pour un tableau de commande de véhicule automobile, pour une dalle tactile ou encore pour un écran tactile, permettant de détecter un appui ou un glissé d'un utilisateur, provenant par exemple du doigt de l'utilisateur ou de la pointe d'un stylet, pour réaliser une commande.

Le dispositif de commande comporte au moins un premier capteur de pression et un deuxième capteur de pression superposés.

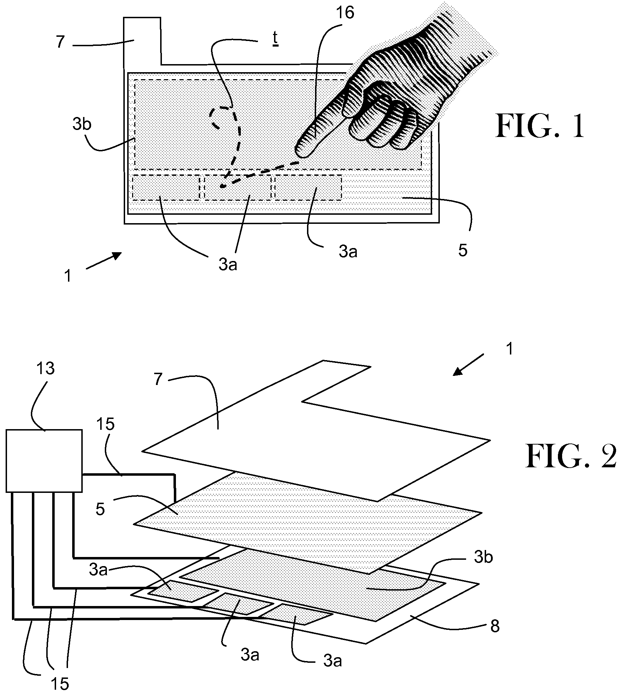

Les figures 1 et 2 représentent un exemple de dispositif de commande 1, représentatif de l'invention mais non limitatif, pour lequel le deuxième capteur de pression est disposé au moins en partie au-dessus du premier capteur de pression.

Le dispositif 1 représenté comporte quatre premiers capteurs de pression 3a, 3b et un deuxième capteur de pression 5. On distingue sur ces figures que le deuxième capteur de pression 5 couvre entièrement les premiers capteurs de pression 3a, 3b. On pourrait également envisager que le deuxième capteur 5 couvre partiellement un ou plusieurs premiers capteurs (non représenté).

Le dispositif de commande 1 peut également comporter un revêtement de protection 7 pour protéger la surface tactile du dispositif de commande 1 d'éventuelles agressions extérieures. On dispose de préférence les capteurs 3a, 3b, 5 sur une base plane 8 du dispositif 1 (figure 2) ou présentant une courbure simple, telle qu'une courbure cylindrique, afin faciliter le fonctionnement des capteurs 3a, 3b, 5.

Les premier et deuxième capteurs 3a et 5 comportent chacun deux couches souples de support 9a, 9b espacées par des entretoises 10. Les entretoises 10 peuvent être élastiques. Les entretoises 10 comportent par exemple une colle ou un adhésif à double face.

Chaque couche 9a, 9b porte sur des faces mutuellement en regard des éléments contacteurs permettant de réaliser un contact électrique lors de la compression des couches 9a, 9b.

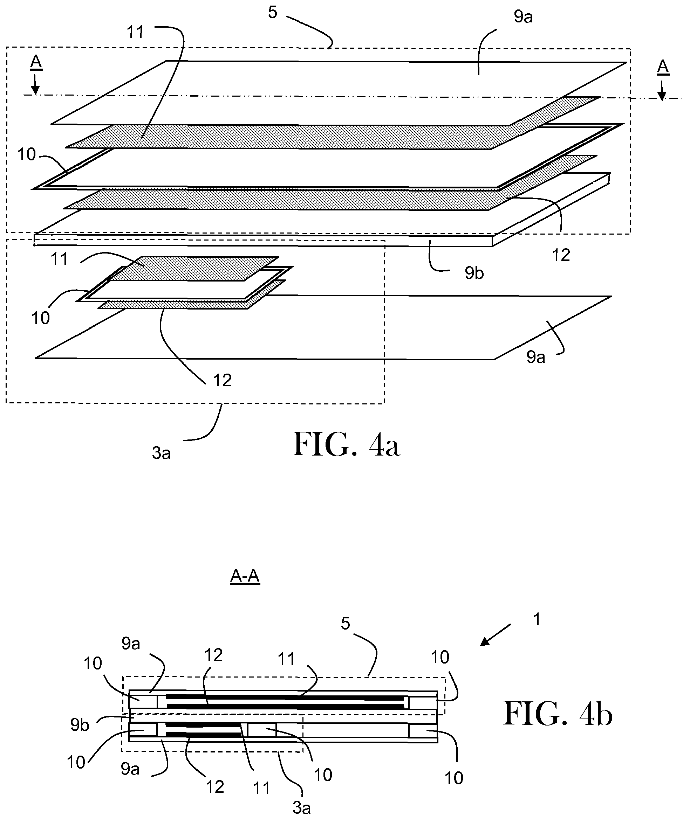

On a représenté la succession des couches de support 9a, 9b et des éléments contacteurs d'un dispositif de commande comportant un premier capteur 3a et un deuxième capteur 5 superposé au premier capteur 3a, en vue éclatée sur la figure 4a. Les figures 4b, 5 et 6 représentent des vues en coupe AA des différentes couches 9a, 9b assemblées avec des entretoises 10.

On prévoit par exemple, qu'un élément contacteur d'une couche souple de support 9a, 9b comporte une couche résistive 12 dont la résistance peut varier lors de la compression des couches 9a, 9b. La couche résistive 12 comporte une résistance sensible à une pression qui se traduit par un signal électrique exploitable pour connaître l'endroit de l'appui et/ ou la pression appliquée. Cette couche résistive 12 est de préférence un capteur à technologie FSR. L'élément contacteur en vis-à-vis comporte une couche conductrice 11 dont la résistance est négligeable relativement à la couche résistive 12.

Les éléments contacteurs sont par exemple formés d'une encre conductrice imprimée par sérigraphie.

Bien que les figures représentent la couche conductrice 11 sur une face supérieure et la couche résistive 12 sur une face inférieure de la couche de support 9b en regard, il est possible d'inverser cette disposition. Il est également possible de disposer un capteur avec une couche conductrice 11 sur la face supérieure et la couche résistive 12 sur une face inférieure et une disposition inverse pour l'autre capteur.

Le premier et le deuxième capteurs 3a, 3b, 5 peuvent comporter une couche souple de support commune 9b. Par exemple, et comme représenté sur les figures 4a à 6, la couche souple de support commune 9b porte sur une première face une couche conductrice 11 du premier capteur 3a et sur une deuxième face opposée, une couche résistive 12 du deuxième capteur 5.

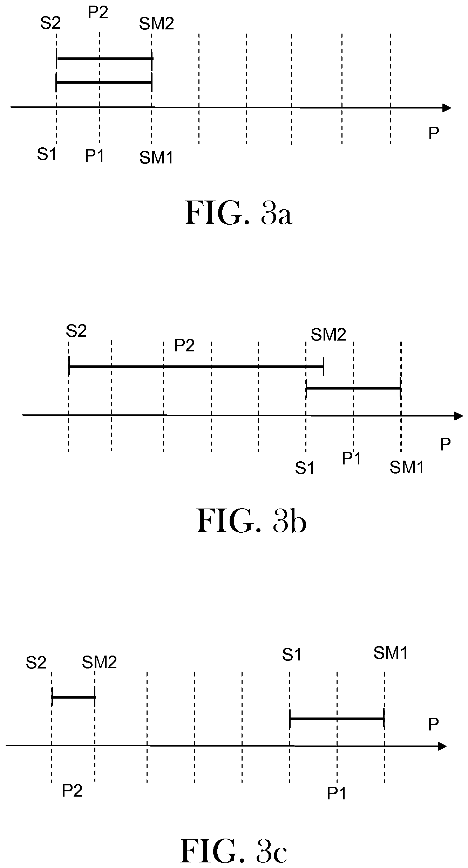

La figure 3a illustre un premier exemple de plages de pression propres P1 et P2 détectables respectivement par les premiers capteurs 3a, 3b et le deuxième capteur 5, sur un axe horizontal des pressions P croissantes. La plage de pression propre P1 détectable par les premiers capteurs 3a, 3b est comprise entre un seuil minimal S1 et un seuil maximal SM1 de pression détectable. La plage de pression propre P2 détectable par le deuxième capteur 5 est comprise entre un seuil minimal S2 et un seuil maximal SM2 de pression détectable. Au-delà des seuils maximaux de pression SM1, SM2, la pression d'appui peut toujours être détectée par les capteurs 3a, 3b, 5 mais les signaux de sorties 15 des capteurs 3a, 3b, 5 sont saturés.

Les premier et deuxième capteurs 3a, 5 sont superposés de manière qu'un appui sur la surface tactile du dispositif 1 permette la commande de deux fonctions distinctes.

Dans cet exemple, les plages de pression propres P1, P2 détectables par les premiers et deuxième capteurs 3a, 3b, 5 sont les mêmes, c'est-à-dire que le seuil minimal S1 de détection du premier capteur 3a, 3b est sensiblement identique au seuil minimal S2 de détection du deuxième capteur 5. Par conséquent, lorsqu'un utilisateur appuie sur la surface tactile, le deuxième capteur de pression supérieur permet la commande d'une première fonction. Puis, lorsque l'utilisateur appuie plus fortement, le premier capteur de pression 3a, 3b pris en sandwich entre la base 8 et la surface tactile du deuxième capteur de pression 5, permet la commande d'une deuxième fonction distincte de la première fonction.

En outre, les plages de pression détectables P1 et P2 peuvent comporter des seuils de détection maximaux SM1, SM2 différents (non représenté).

Dans l'exemple représenté sur la figure 3b, le seuil minimal S1 de détection du premier capteur 3a, 3b est supérieur au seuil minimal S2 de détection dudit deuxième capteur 5. Les différents premiers capteurs de pression 3a, 3b peuvent bien sûr présenter des plages de pression propres P1 détectables respectives différentes mais dont le seuil minimal de détection propre S1 est supérieure au seuil S2 du deuxième capteur 5.

Par exemple, et comme représenté sur la figure 3b, le seuil minimal S1 de détection propre d'un premier capteur 3a, 3b est au moins cinq fois supérieur au seuil minimal S2 de détection propre du deuxième capteur 5. On peut envisager un seuil minimal S1 de la pression détectable par un premier capteur 3a, 3b compris entre 150 à 200 grammes/cm² et un seuil minimal SM2 de la pression détectable par le deuxième capteur 5 compris entre 20 et 50 grammes/cm².

Selon un autre exemple représenté sur la figure 3c, le seuil minimal S1 de la pression détectable par un premier capteur 3a, 3b est en outre supérieur au seuil maximal S2 de la pression détectable par le deuxième capteur 5. Ainsi, la plage de pression P1 détectable par le premier capteur 3 et la plage de pression P2 détectable par le deuxième capteur 5 ne se chevauchent pas, ce qui permet de faciliter l'interprétation de la commande souhaitée par l'utilisateur.

Pour les exemples dans lesquels les plages de pression propres P1, P2 sont différentes pour les premiers et deuxième capteurs 3a, 3b, 5, on prévoit dans un premier mode de réalisation illustré par les figures 4a et 4b, que la couche souple de support commune 9b possède une épaisseur supérieure à l'épaisseur de la couche souple de support 9a du deuxième capteur 5.

Selon un deuxième mode de réalisation, on prévoit que les éléments contacteurs du premier capteur 3a possèdent une conductivité électrique inférieure à la conductivité électrique des éléments contacteurs du deuxième capteur 5 (non représenté).

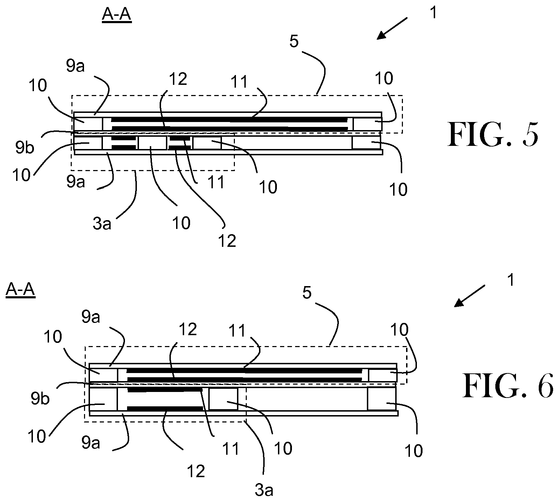

La figure 5 représente un troisième mode de réalisation dans lequel le premier capteur 3a possède une densité d'entretoises 10 supérieure à la densité d'entretoises 10 du deuxième capteur 5.

La figure 6 représente un quatrième mode de réalisation pour lequel l'interstice entre les couches souples de support 9a, 9b du premier capteur 3a est supérieur à l'interstice entre les couches souples de support 9a, 9b du deuxième capteur 5. Pour cela, on prévoit que les entretoises 10 du premier capteur 3a possèdent une épaisseur supérieure à l'épaisseur des entretoises 10 du deuxième capteur 5.

En outre et comme représenté sur la figure 2, le dispositif de commande 1 peut comporter une unité de traitement 13 reliée aux signaux de sorties 15 des capteurs 3a, 3b, 5. Par exemple, l'unité de traitement 13 fournit un courant d'alimentation aux éléments conducteurs 11 de chaque capteurs 3a, 3b, 5 et relève sur des signaux de sorties 15, la tension aux bornes des couches résistives 12 des capteurs 3a, 3b, 5 respectifs, de manière à obtenir une information de la position et/ou de la force de l'appui.

Selon un premier exemple d'application, l'unité de traitement 13 est en outre configurée pour qu'une variation de pression détectée par le deuxième capteur 5 permette la sélection d'une commande et pour qu'une variation de pression détectée par le premier capteur 3a, 3b correspondant, c'est-à-dire situé au-dessous de l'appui détecté par le deuxième capteur 5, permette la validation de la commande sélectionnée.

En outre, pour permettre un accès rapide à l'utilisateur, par exemple pour un simple appui fort permettant une commande de validation d'une fonction, on prévoit par exemple, comme représenté sur les figures 1 et 2 que les premiers capteurs 3a soient disposés dans une bordure de la surface tactile du dispositif 1.

Selon un deuxième exemple d'application, l'unité de traitement 13 est configurée pour qu'une variation de pression détectée par le deuxième capteur 5 permette la reconnaissance d'un caractère et pour qu'une variation de pression détectée par ledit premier capteur 3a, 3b correspondant, permette la validation du caractère reconnu.

On prévoit alors un premier capteur 3b aux dimensions supérieures à celles des premiers capteurs 3a situés en bordure, de manière que le deuxième capteur 5 dispose d'une surface tactile suffisamment grande pour la reconnaissance de caractère et que le premier capteur 3b situé en dessous permette la validation du caractère reconnu par un appui sur la surface correspondante.

On a représenté sur la figure 1, un exemple d'une trajectoire t d'une succession d'appuis légers d'un doigt 16 d'un utilisateur sur la surface tactile du dispositif 1, correspondant au chiffre « 2 », par exemple pour la composition d'un numéro de téléphone. On constate que la trajectoire t de l'utilisateur a légèrement débordé sur une surface tactile définie à la fois par deux premiers capteurs 3a, 3b et par le deuxième capteur 5. Toutefois, la commande reste facilement compréhensible pour l'unité de traitement 13 du fait que les premiers capteurs 3a, 3b ne détectent pas cette pression d'appui légère. La variation de pression détectée par le deuxième capteur 5 seul, est transmise à l'unité de traitement 13 qui reconnaît le caractère. L'utilisateur peut alors valider la reconnaissance de caractère en appuyant plus fortement sur la surface tactile pour être détecté par un premier capteur 3a.

On comprend donc qu'un tel dispositif de commande 1 dont les premier et deuxième capteurs sont superposés, permet de facilement réaliser deux fonctions successives au même niveau par un simple touché de la surface tactile.

## Revendications

1. Dispositif de commande à surface tactile comportant au moins un premier capteur de pression (3a, 3b) et un deuxième capteur de pression (5), ledit premier (3a, 3b) et ledit deuxième capteurs (5) comportant chacun deux couches souples de support (9a, 9b) espacées par des entretoises (10), chacune desdites couches (9a, 9b) portant sur des faces mutuellement en regard des éléments contacteurs permettant de réaliser un contact électrique lors de la compression desdites couches (9a, 9b), lesdits premier et deuxième capteurs (3a, 3b, 5) étant superposés et présentant des seuils minimaux de détection propres (S1, S2) respectifs distincts, pour qu'un appui sur la surface tactile dudit dispositif permette la commande de deux fonctions distinctes, **caractérisé en ce que** ledit premier capteur de pression (3a, 3b) présente une surface tactile de dimensions inférieures aux dimensions de la surface tactile dudit deuxième capteur de pression (5) et **en ce que** le seuil minimal (S1) de détection propre dudit premier capteur (3a, 3b) est au moins cinq fois supérieur au seuil minimal (S2) de détection propre dudit deuxième capteur (5).

2. Dispositif de commande selon la revendication 1, **caractérisé en ce que** ledit premier et ledit deuxième capteurs (3a, 3b, 5) comportent une couche souple de support commune (9b).

3. Dispositif de commande selon l'une quelconque des revendications précédentes, **caractérisé en ce qu'**un élément contacteur d'une couche souple de support (9a, 9b) comporte une couche résistive (12) dont la résistance peut varier lors de la compression desdites couches (9a, 9b).

4. Dispositif de commande selon l'une des revendications précédentes, **caractérisé en ce que** le seuil minimal (S1) de détection propre dudit premier capteur (3a, 3b) est compris entre 150 et 200 grammes/cm2 et **en ce que** le seuil minimal (S2) de détection propre dudit deuxième capteur (5) est compris entre 20 et 50 grammes/cm2.

5. Dispositif de commande selon l'une quelconque des revendications 1 à 4, prise ensemble avec la revendication 3, **caractérisé en ce que** la couche souple de support commune (9b) possède une épaisseur supérieure à l'épaisseur de la couche souple de support (9a) dudit deuxième capteur (5).

6. Dispositif de commande selon l'une quelconque des revendications 1 à 5, **caractérisé en ce que** les éléments contacteurs dudit premier capteur (3a, 3b) possèdent une conductivité électrique inférieure à la conductivité électrique des éléments contacteurs dudit deuxième capteur (5).

7. Dispositif de commande selon l'une quelconque des revendications 1 à 5, **caractérisé en ce que** ledit premier capteur (3a, 3b) possède une densité d'entretoises (10) supérieure à la densité d'entretoises dudit deuxième capteur (5).

8. Dispositif de commande selon l'une quelconque des revendications 1 à 5, **caractérisé en ce que** l'interstice entre les couches souples de support (9a, 9b) dudit premier capteur (3a, 3b) est supérieur à l'interstice entre les couches souples de support (9a, 9b) dudit deuxième capteur (5).

9. Dispositif de commande selon l'une quelconque des revendications précédentes, **caractérisé en ce qu'**il comporte une unité de traitement (13) reliée à des signaux de sorties (15) desdits capteurs (3a, 3b, 5), l'unité de traitement (13) étant en outre configurée pour qu'une variation de pression détectée par ledit deuxième capteur (5) permette la sélection d'une commande et pour qu'une variation de pression détectée par ledit premier capteur (3a, 3b) correspondant permette la validation de ladite commande sélectionnée.

10. Dispositif de commande selon l'une quelconque des revendications 1 à 8, **caractérisé en ce qu'**il comporte une unité de traitement (13) reliée à des signaux de sorties (15) desdits capteurs (3a, 3b, 5), l'unité de traitement (13) étant en outre configurée pour qu'une variation de pression détectée par ledit deuxième capteur (5) permette la reconnaissance d'un caractère et pour qu'une variation de pression détectée par ledit premier capteur (3a, 3b) correspondant permette la validation du caractère reconnu.

## Patentansprüche

1. Steuervorrichtung mit berührungsempfindlicher Fläche, die mindestens einen ersten Drucksensor (3a, 3b) und einen zweiten Drucksensor (5) aufweist, wobei der erste (3a, 3b) und der zweite Sensor (5) je zwei durch Abstandshalter (10) beabstandete weiche Trägerschichten (9a, 9b) aufweisen, wobei jede der Schichten (9a, 9b) auf einander gegenüberliegenden Seiten Kontaktelemente trägt, die es ermöglichen, beim Zusammendrücken der Schichten (9a, 9b) einen elektrischen Kontakt herzustellen, wobei die ersten und zweiten Sensoren (3a, 3b, 5) übereinander liegen und unterschiedliche eigene Mindesterfassungsschwellen (S1, S2) aufweisen, damit ein Druck auf die berührungsempfindliche Fläche der Vorrichtung das Steuern von zwei unterschiedlichen Funktionen ermöglicht, **dadurch gekennzeichnet, dass** der erste Drucksensor (3a, 3b) eine berührungsempfindliche Fläche kleinerer Abmessungen als die Abmessungen der berührungsempfindlichen Fläche des zweiten Drucksensors (5) aufweist, und dass die eigene Mindesterfassungsschwelle (S1) des ersten Sensors (3a, 3b) mindestens fünf Mal höher ist als die eigene Mindesterfassungsschwelle (S2) des zweiten Sensors (5).

2. Steuervorrichtung nach Anspruch 1, **dadurch gekennzeichnet, dass** der erste und der zweite Sensor (3a, 3b, 5) eine gemeinsame weiche Trägerschicht (9b) aufweisen.

3. Steuervorrichtung nach einem der vorhergehenden Ansprüche, **dadurch gekennzeichnet, dass** ein Kontaktelement einer weichen Trägerschicht (9a, 9b) eine Widerstandsschicht (12) aufweist, deren Widerstand beim Zusammendrücken der Schichten (9a, 9b) variieren kann.

4. Steuervorrichtung nach einem der vorhergehenden Ansprüche, **dadurch gekennzeichnet, dass** die eigene Mindesterfassungsschwelle (S1) des ersten Sensors (3a, 3b) zwischen 150 und 200 Gramm/cm2 liegt, und dass die eigene Mindesterfassungsschwelle (S2) des zweiten Sensors (5) zwischen 20 und 50 Gramm/cm2 liegt.

5. Steuervorrichtung nach einem der Ansprüche 1 bis 4, zusammen mit Anspruch 3, **dadurch gekennzeichnet, dass** die gemeinsame weiche Trägerschicht (9b) eine größere Dicke als die Dicke der weichen Trägerschicht (9a) des zweiten Sensors (5) aufweist.

6. Steuervorrichtung nach einem der Ansprüche 1 bis 5, **dadurch gekennzeichnet, dass** die Kontaktelemente des ersten Sensors (3a, 3b) eine geringere elektrische Leitfähigkeit besitzen als die elektrische Leitfähigkeit der Kontaktelemente des zweiten Sensors (5).

7. Steuervorrichtung nach einem der Ansprüche 1 bis 5, **dadurch gekennzeichnet, dass** der erste Sensor (3a, 3b) eine Dichte an Abstandshaltern (10) besitzt, die größer ist als die Dichte an Abstandshaltern des zweiten Sensors (5).

8. Steuervorrichtung nach einem der Ansprüche 1 bis 5, **dadurch gekennzeichnet, dass** der Zwischenraum zwischen den weichen Trägerschichten (9a, 9b) des ersten Sensors (3a, 3b) größer ist als der Zwischenraum zwischen den weichen Trägerschichten (9a, 9b) des zweiten Sensors (5).

9. Steuervorrichtung nach einem der vorhergehenden Ansprüche, **dadurch gekennzeichnet, dass** sie eine Verarbeitungseinheit (13) aufweist, die mit Ausgangssignalen (15) der Sensoren (3a, 3b, 5) verbunden ist, wobei die Verarbeitungseinheit (13) außerdem so konfiguriert ist, dass eine vom zweiten Sensor (5) erfasste Druckänderung die Auswahl einer Steuerung erlaubt, und dass eine vom entsprechenden ersten Sensor (3a, 3b) erfasste Druckänderung die Bestätigung der ausgewählten Steuerung erlaubt.

10. Steuervorrichtung nach einem der Ansprüche 1 bis 8, **dadurch gekennzeichnet, dass** sie eine Verarbeitungseinheit (13) aufweist, die mit Ausgangssignalen (15) der Sensoren (3a, 3b, 5) verbunden ist, wobei die Verarbeitungseinheit (13) außerdem so konfiguriert ist, dass eine vom zweiten Sensor (5) erfasste Druckänderung die Erkennung eines Schriftzeichens erlaubt, und dass eine vom entsprechenden ersten Sensor (3a, 3b) erfasste Druckänderung die Bestätigung des erkannten Schriftzeichens erlaubt.

## Claims

1. Control device with touch-sensitive surface comprising at least a first pressure sensor (3a, 3b) and a second pressure sensor (5), said first (3a, 3b) and said second (5) sensors each comprising two flexible support layers (9a, 9b) spaced apart by spacers (10), each of said layers (9a, 9b) bearing, on faces facing one another, contactor elements making it possible to produce an electrical contact upon the compression of said layers (9a, 9b), said first and second sensors (3a, 3b, 5) being superposed and having respective distinct specific minimum detection thresholds (S1, S2), for a pressing action on the touch-sensitive surface of said device to make it possible to control two distinct functions, **characterized in that** said first pressure sensor (3a, 3b) has a touch-sensitive surface of dimensions smaller than the dimensions of the touch-sensitive surface of said second pressure sensor (5) and **in that** the specific minimum detection threshold (S1) of said first sensor (3a, 3b) is at least five times greater than the specific minimum detection threshold (S2) of said second sensor (5).

2. Control device according to Claim 1, **characterized in that** said first and said second sensors (3a, 3b, 5) comprise a common flexible support layer (9b).

3. Control device according to any one of the preceding claims, **characterized in that** a contactor element of a flexible support layer (9a, 9b) comprises a resistive layer (12), the resistance of which can vary upon the compression of said layers (9a, 9b).

4. Control device according to one of the preceding claims, **characterized in that** the specific minimum detection threshold (S1) of said first sensor (3a, 3b) lies between 150 and 200 grammes/cm2 and **in that** the specific minimum detection threshold (S2) of said second sensor (5) lies between 20 and 50 grammes/cm2.

5. Control device according to any one of Claims 1 to 4, taken together with Claim 3, **characterized in that** the common flexible support layer (9b) has a thickness greater than the thickness of the flexible support layer (9a) of said second sensor (5).

6. Control device according to any one of Claims 1 to 5, **characterized in that** the contactor elements of said first sensor (3a, 3b) have an electrical conductivity less than the electrical conductivity of the contactor elements of said second sensor (5).

7. Control device according to any one of Claims 1 to 5, **characterized in that** said first sensor (3a, 3b) has a density of spacers (10) greater than the density of spacers of said second sensor (5).

8. Control device according to any one of Claims 1 to 5, **characterized in that** the interstice between the flexible support layers (9a, 9b) of said first sensor (3a, 3b) is greater than the interstice between the flexible support layers (9a, 9b) of said second sensor (5).

9. Control device according to any one of the preceding claims, **characterized in that** it comprises a processing unit (13) linked to output signals (15) from said sensors (3a, 3b, 5), the processing unit (13) being further configured for a variation of pressure detected by said second sensor (5) to make it possible to select a command and for a variation of pressure detected by said corresponding first sensor (3a, 3b) to make it possible to validate said selected command.

10. Control device according to any one of Claims 1 to 8, **characterized in that** it comprises a processing unit (13) linked to output signals (15) from said sensors (3a, 3b, 5), the processing unit (13) being further configured for a variation of pressure detected by said second sensor (5) to make it possible to recognize a character and for a variation of pressure detected by said corresponding first sensor (3a, 3b) to make it possible to validate the recognized character.
